# EUROPEAN PATENT APPLICATION

(11) **EP 3 032 813 A1**
(43) Date of publication of application: **15.06.2016**
(21) Application number: 15425107.8
(22) Date of filing: 09.12.2015
(51) Int. Cl.: H04M 15/00, H04W 88/04, H04M 1/253, H04M 1/725

(54) **SYSTEM AND METHOD FOR MAKING PHONE CALLS AND SENDING MESSAGES**

(30) Priority: 09.12.2014 IT RM20140711
(71) Applicant: CONSIGLIO NAZIONALE DELLE RICERCHE, 00185 Roma (IT)
(72) Inventor: Martinelli, Fabio, 00185 Roma (IT); Saracino, Andrea, 00185 Roma (IT)
(74) Representative: Tiburzi, Andrea

(57) **Abstract**

The present invention concerns a system (S) for making phone calls and sending text messages (SMS) comprising at least one calling/sending device (1) for transmitting and receiving a signal, as digital telephone signals and/or text messages; one or more bridge device (2), each one for receiving and transmitting said digital signal from said calling/sending device (1) by a digital channel, as the Internet network and the like, for a predefinable quantity of time and a predefinable quantity of data, at least one receiving device (3) connectable for receiving and transmitting to said calling/sending device (1), in which said one or more bridge devices (2) are each equipped with a software program capable of receiving from said calling/sending device (1) and of transmitting to said calling/sending (1) said digital signal, converting said digital signal into an analog signal suitable for being transmitted through the conventional telephone network (PSTN), and capable to transmit to said receiving device (3) and to receive from said receiving device (3), said analog signal through said conventional telephone network (PSTN).

The present invention also concerns a method implemented by said system.

## Description

The present invention relates to a system for making phone calls and sending messages.

Furthermore, the present invention concerns a method associated to the system, for making phone calls and sending messages.

More specifically, the invention concerns a system of the above kind, studied and realized in particular to allow mobile phone users to call and/or send messages using the telephone traffic made available by a bridge device, but which can be used for any mobile communication system, for which the telephony and sending messages functions through another device is necessary.

In the following, the description will be directed to a system and a method that can be applied to mobile phones, but it is clear that the same should not be considered limited to this specific use.

As it is currently well known, providers of mobile phone services offer monthly pricing plans for people who use third-generation (3G) and fourth generation (4G) connectivity devices, including a default amount of minutes for calls, Short Message Service (SMS) and Internet traffic.

At the end of each month minutes, messages and megabytes of the traffic used service counting is reset, against the payment of the initial monthly fee. In this way, each month minutes, messages and megabytes of traffic possibly still to be consumed, can be lost.

It is evident that this procedure causes the loss of available resources, for which an activation cost was borne.

As regards specifically phone calls, a phone call that takes place between two residents of two different countries is very expensive for both the caller and the receiver.

Generally, calls between mobile phones and landlines that, at the moment of the call are not in the same country, have very high costs. Therefore, mobile phones or landlines users tend to avoid international calls, using alternative technologies known as Voice over IP (VoIP), which allow making phone and video calls between two or more users using Internet network or over GSM or PSTN network, at a very low cost.

There are systems known from the prior art, which offer the possibility of exploiting a telephone as a bridge or *bridging* for other users.

US patent n. US 8,401,533 is an example, which describes a system to make phone calls via wireless networks (3G or WiFi), in which data network instead of the telephone network is used to route the call.

Specifically, a user A wants to call a user B, who, not being reachable, specifies that intends to be contacted on a user C, then the phone call is forwarded by the system directly on the user C. Then, the call that actually takes place is from B to C. In this case, then, there is only a call forward from a user B to a user C.

In European patent application n. EP 1881723, a system to analyze and communicate the status, available or not available, of a fixed or mobile device is described, which processes the information to make a correct call forward. In this case, the system does not actually call, but merely informs about the status of the recipient.

In US Patent n. US 8,452,258, it described an incentive system for users, to offer part of their telephone traffic to share call minutes, but the description is focused mainly on the architecture for reporting offered call minutes.

In US Patent n. US 8,023,479, it is described a model for transferring part of the services of a cellular network to a private or corporate network, using the VoIP system. However, this model only works on a corporate network, where the service provider has control over the entire network and it is therefore not suitable for a global service.

US Patent n. US 8,682,247 relates to a system for the transmission of voice traffic, which uses the WiFi technology and the proximity between multiple devices, for making a bridging of the call.

However, in this case the final receiver must be close to the WiFi network of one of the devices involved, making it impossible to contact a very far receiver.

As specifically regards sending an SMS message from or to a mobile phone resident in a country different from the own, sending and receiving messages by "chat" programs is possible, including multimedia from other users, who use the same program. The chat services are widely used by the majority of 3G and/or 4G mobile phones users, while they cannot be used with landlines or mobile devices of the older generation (2G).

There are currently transferring or bridging SMS systems for reducing the cost of international messages, in which a static link between resident mobile phones in different countries is created and a sending of two SMS messages to a certain initial cost are required.

Systems of this type are described in documents US 8,238,949, EP 2,061,284 and US 8,331,962.

However, the Applicant does not known documents that describe systems for sending free SMS, namely using another user's telephone traffic.

Finally, the patent application US 2010/0166170 concerns the transfer of telephone calls between a sending device and a receiving device residing on two different networks, by using a bridge device.

This patent application provides for the passage of a digital data signal received by Internet transmission channel to a recipient device via a network of the personal area network (PAN) short-range type, in particular of Bluetooth type. The PAN networks are short range networks, limited to the Bluetooth connectivity radius, which is of the order of some tens of meters.

Therefore, by the system described in said patent application, it is possible simply transferring the signal obtained from the Internet network to a surrounding device. Then, the teachings of such a document allow the use of the system in very narrow spaces and do not allow the transmission of the received signal to any type of telephone apparatus.

In the light of the above, it is, therefore, object of the present invention providing a system to allow a user to forward the calls or to send SMS messages to any GSM mobile device or landline, using the telephone traffic offered by other users.

A further object of the present invention is to provide a system, which allows the passage of data and voice signals between devices even very distant from each other.

A further object of the present invention is that of providing the instruments necessary to the execution of the method and the apparatuses that carry out such a method.

It is therefore specific object of the present invention a system for making phone calls and sending text messages comprising at least one calling/sending device for transmitting and receiving a signal, as digital telephone signals and/or text messages; one or more bridge device, each one for receiving and transmitting said digital signal from said calling/sending device through a digital channel, as the Internet network and the like, for a predefinable quantity of time and a predefinable quantity of data, at least one receiving device connectable for receiving and transmitting to said calling/sending device, in which said one or more bridge devices are each equipped with a software program capable of receiving from said calling/sending device and of transmitting to said calling/sending said digital signal, converting said digital signal into an analog signal suitable for being transmitted through the conventional telephone network, and capable to transmit to said receiving device and to receive from said receiving device, said analog signal through said conventional telephone network.

Further according to the invention, said software program simulates the connection of said bridge device with an interface Bluetooth transceiver, such as a headset and a microphone, in order to convert the digital signal received from said calling/sending device, into an analog signal, and the analog signal, received by said receiving device, into a digital signal, such as that the one to be transduced by said Bluetooth transceiver interface, so that said analog signal is transmitted through said conventional telephone network to said receiving device, and said digital signal is transmitted to said calling/sending device, through said digital channel.

Preferably according to the invention, the system comprises a remote control logic unit capable to connect to said calling/sending device and receive said signal, comprising storage means for storing a plurality of information associated with said at least one calling/sending device and said one or more bridge devices, so as to select from said storage means one of said bridge devices according to the availability of said predefinable quantity of time and quantity of data, and sending said signal to said selected bridge device, so that the transmission of said signal occurs between said at least one calling/sending device and said bridge device, and *viceversa,* by said digital channel, such as Internet network and the like, while the transmission of said signal between said bridge device and said receiving device, and *viceversa,* occurs by a conventional telephonic connection.

Still according to the invention, said at least one calling/sending device and one or more bridge devices comprise computation means configured to run a further program, comprising a first operating module (Phone Service Transfer - PST) for the transmission of said telephonic signal, and a second operating module (Service Transfer Application - SST) for the transmission of said signal, such as a text message, by which said at least one calling/sending device and one or more bridge devices can interact with said remote control logic unit.

Always according to the invention, said first operating module (PST) simulates, on said one or more bridge devices, a device capable to take said signal received by said one or more bridge devices from said calling/sending device by Internet and to reproduce it on said conventional telephonic connection activated between said one or more bridge devices and said at least one receiving device, in order to transmit said signal coming from said at least one calling device to said at least one receiving device.

Further according to the invention, said program is provided with a graphic interface (Graphic User Interface - GUI), which:
- implements a numeric keypad and/or allows the interaction with the physical keypad provided on said at least one calling/sending device or one or more bridge devices;
- comprises a list of telephonic numbers, corresponding to said at least one receiving device; and
- comprises a key to enter in said list of numbers, selecting a number and sending said signal to said at least one receiving device by said remote control logic unit.
preferably according to the invention, said interface of said one or more bridge devices allows to predefine said quantity of time, said quantity of available data and the slot of time, in terms of hours and days in a week, when making available said quantity of time and quantity of data; and comprises storage means capable to periodically store said quantity of time and quantity of data, which both said bridge device and said calling/sending device have made use of, to send/receive said signal.

Still according to the invention, said control logic unit associates the transmission of said signal from said at least one calling/sending device, to the availability, in terms of said quantity of time and quantity of predefined data, of said one or more bridge device; and said plurality of information stored in said storage means comprised in said control logic unit are phone numbers related to said one or more bridge devices and said plurality of information are said quantity of predefined time and quantity of predefined data updated.

Always according to the invention, said at least one calling/sending device is chosen among one of the following electronic devices such as a 3G cellular phone and/or a 4G cellular phone, and/or a smartphone and/or a tablet, provided with an Internet connection; and said one or more bridge devices are chosen among one of the following electronic devices such as a 3G cellular phone and/or a 4G cellular phone, and/or a smartphone and/or a tablet, provided with an Internet connection; said at least one receiving device is chosen amongst one of the following electronic devices such as 2G cellular phone, and/or a 3G cellular phone, and/or a 4G cellular phone, and/or a fixed telephone; and
in that said at least one calling/sending device and at least one receiving device are placed in different geographical places during said transmission/reception of said signal.

Further according to the invention, said at least one calling/sending device can operate also as a bridge device and *viceversa.*

It is also object of the present invention a method for making phone calls and sending messages comprising the following steps:
(A) providing at least one calling/sending device for transmitting and receiving a signal, such as digital telephone signals and/or text messages;
(B) providing at least one receiving device for receiving and transmitting a signal, such as telephone signals and/or text messages;
(C) providing at least one bridge device, for the reception and the transmission of said digital signal from said calling/sending device through a digital channel, such as the Internet network and the like, for a predefinable amount of time and a predefinable amount of data;
(D) receiving device by said calling/sending device and transmitting to said calling/sending device said digital signal;
(E) converting said digital signal into an analog signal suitable for the transmission through the conventional telephone network;
(F) transmitting to said receiving device and receive from said receiving device, by means of said bridge device, said analog signal through said conventional telephone network.

Further according to the invention, said method comprises the steps of simulating the connection of said bridge device with an Bluetooth transceiver interface, such as a headset and a microphone, in order to convert said digital signal, received from said calling/sending device, into an analog signal, and the analog signal, received by said receiving device, into a digital signal, such as that to be transduced by means of said Bluetooth transceiver interface, so that:
- said analog signal is transmitted to the digital interface of said bridge device and then forwarded through said conventional telephone network to said receiver; and
- said digital signal is transmitted to said calling/sending device, through said digital channel.

Preferably according to the invention, said method comprises the following steps:
- providing said calling/sending device a first operative module for the transmission/reception of a telephonic signal, and a second operative module for the transmission/ reception of a text message, and a graphic interface comprising storage means to store a phonebook, where there are phone numbers related to said at least one receiving device;
- at least one bridge device of said first operative module and second operative module;
- providing a control logic unit, provided with storage means to store a list, said list comprising data related to one or more bridge devices available in terms of a predefinable quantity of time to make calls and a predefinable quantity of data for sending text messages, said control logic unit being able to connect with said calling/sending device and to receive and send said signal, and select from said list one of said bridge device, to send said signal to said bridge device selected according to the following sub-steps:
- selecting, by said at least one calling/sending device, a telephone number related to said at least one receiving device from said phonebook comprised in said graphic interface and sending said signal from said at least one calling/sending device to said at least one selected receiving device;
- receiving said signal sent from said control logic unit, which identifies the geographical destination place of said signal according to the code contained in said telephone number, related to at least one selected receiving device, received from said calling/sending device;
- selecting, by said control logic unit, from said list of available bridge devices, at least one available bridge device, said at least one bridge device being dwelled in the destination geographical place of said signal and forwarding to said bridge device, by Internet, the request of sending said signal with the number of said receiving device;
- together with said selection of said phase (D3), activating, by said control logic unit, a full duplex communication channel by Internet between said calling/sending device and said bridge device; and
activating, by said first operative module, installed on said bridge device, the transmission of said signal from said bridge device to said receiving device, by a telephony connection; and
- transmitting said signal from said receiving device to said bridge device by said conventional telephonic connection and from said bridge device to said calling/sending device, by Internet.

The present invention will be now described, for illustrative but not limitative purposes, according to its preferred embodiments, with particular reference to the figures of the enclosed drawings, wherein:
figure 1 shows the generic architecture of the system for telephone calls and sending messages through a bridge device, object of the present invention;
figure 2 shows a detail of figure 1;
figure 3 shows a block diagram for forwarding calls by the method for phone calls and sending messages through a bridge device, subject of the invention;
figure 4 shows a detail of the block diagram of figure 3;
figure 5 shows a block diagram for sending messages by means of the method for phone calls and sending messages through a bridge device, subject of the invention; and
figure 6 shows a detail of the block diagram of figure 5.

In the various figures, similar parts will be indicated by the same reference numbers.

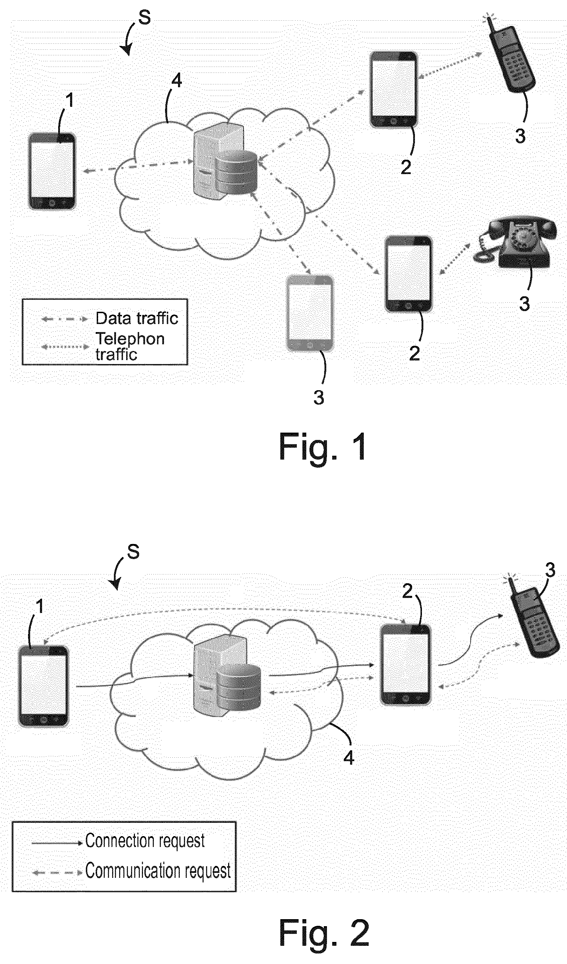

Referring to figure 1, the system S of the invention is used to make phone calls and to send messages through a bridge device and it comprises a calling/sending device 1, associated to a calling user, when it has to make a phone call or when the sender needs to send a text message.

Said calling/sending device 1 can be represented by a 3G or 4G mobile phone, a smartphone or a tablet, which is equipped with Internet connection.

The system S also comprises an assuming or bridge device 2, associated with an assuming user, which provides part of its minutes of phone traffic, both for telephone calls and for text messages.

Said bridge device 2 can have the same characteristics of the calling/sending device 1. Moreover, a calling/sending device 1 can also act as a bridge device 2 and vice versa.

The system S also comprises a receiving device 3, associated with a user, which receives the phone call or the message of the calling/sender user. The connection between said bridge device 2 and said receiving device 3 takes place through the telephone network or through the PSTN (Public Switched Telephone Network). As it is well known, the PSTN network allows the transmission reception of analog signals. This network, therefore, is mainly used for the transmission of voice calls and text messages.

Said receiving device 3 may be a 2G, 3G, or 4G phone, or a landline.

In order to allow the transmission and the reception of a received or to be transmitted digital signal via the Internet network, through the PSTN analog telephone line, it is necessary to convert in real time said digital signal and in a bidirectional way. For this purpose, said calling/sending device 1 and the first bridge device 2 are equipped with a software program or application, which comprises a first module to make phone calls and a second module for sending messages. In addition, the bridge device 2, i.e. the one that actually transmits and receives signals through the conventional telephone network, provides a further program or module that allows, as better described below, the above data conversion from a digital format to an analog format and vice versa, for the transmission or the reception of signals through the conventional telephone line.

The first module to make phone calls is Phone Service Transfer (PST) and the second module for sending messages is called SMS Transfer Service (SST).

Said PST and SST modules have a graphical interface or GUI (Graphic Unit Interface), through which making phone calls and sending messages is possible.

Said interface implements a numeric keypad, or allows interaction with the physical keypad possibly provided on said calling/sending device 1 or bridge device 2, to type the phone number of the receiving device 3 or to type the message text.

In case of sending of a text message, viewing the text and number of characters used in a text box is possible. Also, it is possible to keep the history of sent and received messages, grouped by contacts.

Said interface has, also, a button that allows the access to the contact list or address book to contact a recipient, whose number is already stored in the device.

Said PST and SST modules of said application include a graphical interface - graphic unit interface (GUI) for the configuration of the services offered as an assuming user.

In particular, by said GUI interface, it is possible setting the amount of minutes of phone call or the number of messages that an assuming user can offer to any callers/senders. In other words, the user of the bridge device 2 can set the time that makes available the respective bridge device 2 to take phone calls or messages from callers/senders devices 1. More specifically, by said GUI interface, it is also possible to configure time slots and/or the days when an assuming user intends to offer his traffic telephone minutes.

Said GUI interface monthly keeps track of both the amount of minutes and of messages already used by the assuming user and by callers/senders users.

The system S also includes a control logic unit 4 remote from said caller/sender 1 and bridge 2 devices, which combines callers/senders user requests, and then callers/senders devices 1, to the assuming user availability, and then of the bridge devices 2.

In particular, said control logic unit 4 can be represented by a single server or by a plurality or server clusters, depending on the complexity of the operations to be performed, physically controlled by the operator of the software or the application at hand.

Said control logic unit 4 stores a plurality of information of caller/sender and assuming users.

Once said software is installed on said caller/sender devices 1 and said bridge devices 2, the respective caller/sender and assuming users create a personal space or *account* on said control logic unit 4, to which it can be accessed by a user name and a password.

Said account may be updated with the information for each user from time to time by said caller/sender and assuming users or directly by said software.

The telephone numbers of said available callers/senders 1 and bridge 2 devices, are stored in a register in said control logic unit 4 and to each number said information related to each user are associated.

In particular, as regards the bridge devices 2, the available information concern the amount of call minutes or the number of messages offered by the assuming users, the nationality of the assuming user and the current geographical position, the availability status, busy or not available, of the assuming user, the telephone company and the active offers, the minutes or the number of messages already offered by the assuming user, on the basis of which the assuming user will receive a payment proportional to the offered service.

As for the software module that must be installed at least in the bridge device 2 (of course it can also be installed in the sender device 1 at the time when it becomes a bridge device for other users, as part of the service), this is capable to perform the conversion within the bridge device 2 from a digital data signal, received through the Internet channel, a voice signal to be sent over the PSTN telephone network. Such a conversion is, as mentioned, bidirectional. This conversion is obtained by the execution of a program, which is followed by said bridge device 2 and emulates a Bluetooth headset equipped with a microphone. This program allows to transmit and to receive the telephone signal in the PSTN without hardware modification of said bridge device 2, or having to apply a control on the telephone architecture. Finally, it is stated that this program that emulates said Bluetooth headset and microphone is a software abstraction, so there is no actual transmission of signals via Bluetooth. In substance, said program operates as if it receives from a Bluetooth headset and microphone a digital signal transforming it inevitably into an analog signal, which, instead of being transmitted or received through the transducers of the headset, is transmitted or received via the conventional PSTN telephone line, thus being able to reach devices at any distance, connected both to the landline and to the mobile network.

Of course, the above module or emulation program inhibits the operation of the transducers of said bridge device 2, i.e. the speakers and microphone.

The operation of the system described above with regard to making phone calls, is as follows.

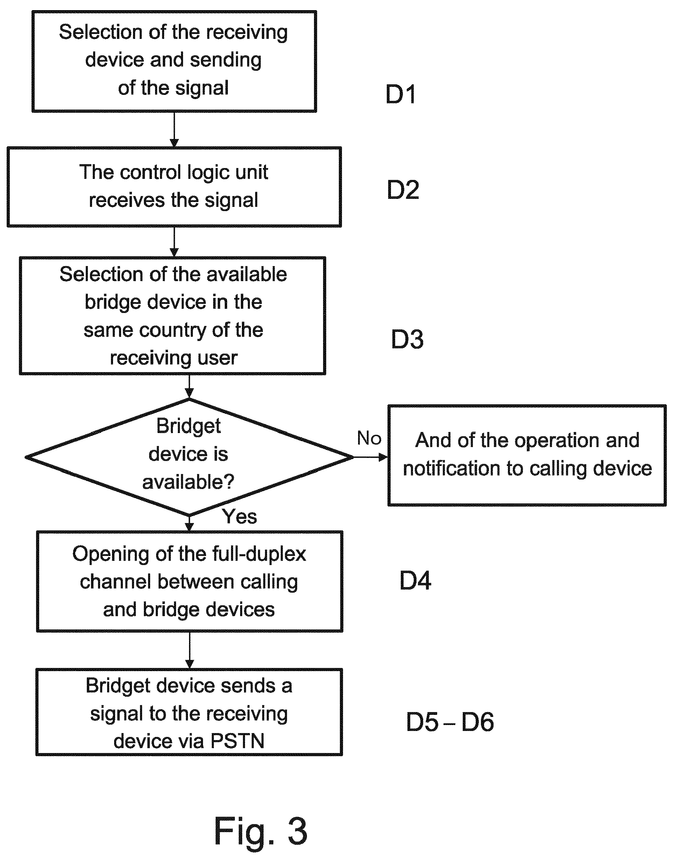

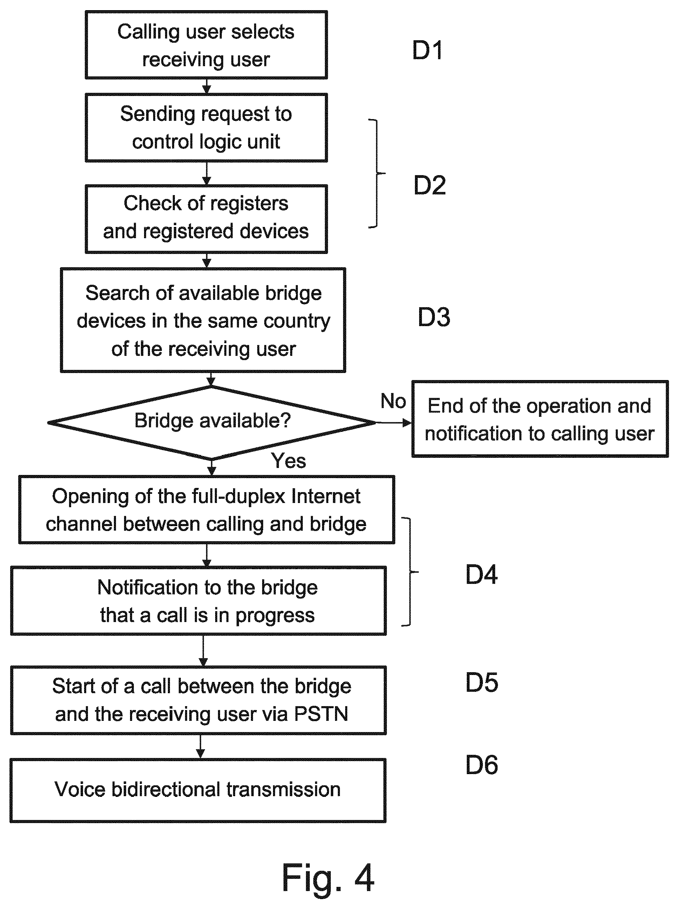

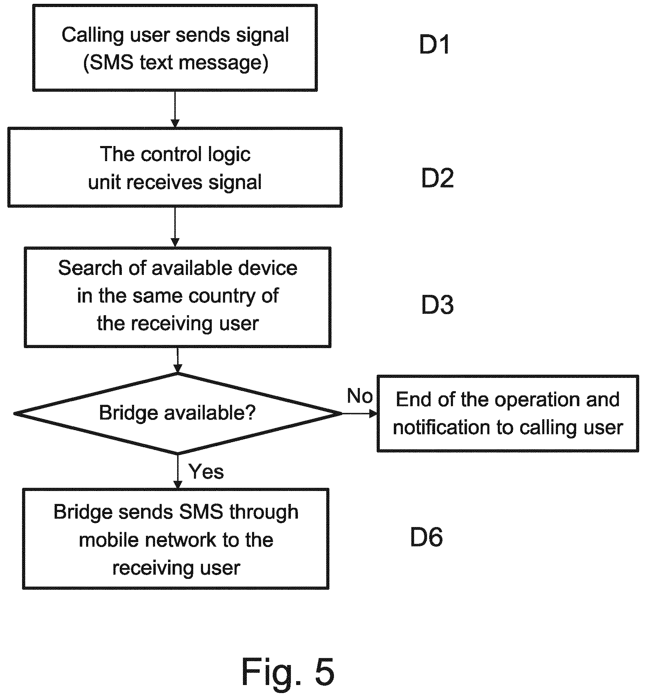

Referring to figures 3-5, when a calling user intends to use the calling device 1 to make a free phone call, i.e. taking advantage of the telephone traffic available of said assuming user, selects the phone number of the receiving user from the address book contained in said GUI interface.

The request is sent to said control logic unit 4, which identifies the geographic location of the call based on the prefix contained in the number received from said calling device 1.

Said control logic unit 4 selects from the register of available assuming users, an assuming user who resides in the geographical destination of the call and forwards to said bridge device 2, via Internet network, the request to make the call together with the number of the receiving device 3.

Simultaneously to the sending of the request, said control logic unit 4 opens a full duplex communication channel via Internet network between said calling user and said assuming user, while said PST software module, installed on said bridge device 2, activates the sending of telephone signal from said bridge device 2 to said receiving device 3.

The transmission of the telephone signal (in this case, therefore, audio) between said bridge device 2 and said receiving device 3 takes place through the telephone line of the telephone operator of the telephone traffic of said bridge device 2.

In order to transmit the audio signal from said calling device 1 to said receiving device 3, said PST software module simulates, on said bridge device 2, a virtual device that simulates a Bluetooth type microphone headset, which allows to take the audio signal calling user from Internet network in arrival to the bridge device 2 and to reproduce it on the phone line opened between said bridge device 2 and said receiving device 3.

In particular, the digital data received from said bridge device 3 by means of the Internet network from said sending device 1, using the PST program or software application, installed either on said bridge device 2 and on said sender device 1, are processed by a software module that emulates the Bluetooth headset and then sent to the radio interface of said bridge device 2. From this they then follow the normal conversion path into analog signals, to be subsequently, virtually, transmitted via the PSTN telephone network, which connects said bridge device 2 to said receiving device 3.

At the same time, said PST program or software inhibits the microphone of said bridge device 2.

In this way, the assuming user does not enter in the communication between the caller user and the receiving user, and, at the same time, he cannot, of course, use his own device to bridge two calls during the current call of the caller user.

In this way, the audio signal coming from said calling device 1 via the Internet network and received by said bridge device 2, is forwarded to said receiving device 3 via the ordinary telephone line, in a completely transparent way for the assuming user.

In order to transmit the telephone signal in the opposite direction, i.e. from said receiving device 3 to said calling device 1, said assuming or bridge device 2 sends the audio signal received by said receiving device 3 to the calling device 1 via the Internet network.

In other words, the signal conversion is bi-directional and takes place according to the following alternative steps:
a. upon receiving a data signal carrying the voice, the application on said bridge device 2 sends the corresponding signal to the Bluetooth emulated microphone, forcing said bridge device 2 to transmit the voice over the phone line to said receiving device 3;
b. upon reception of a telephone signal carrying the voice, said signal is interpreted on said bridge device 2 as a signal to be sent to the emulated Bluetooth headset.

The receiving user may be provided with a landline type or 2G old generation mobile receiving device 3.

In fact, the telephone signal is transmitted via the telephone line only between said bridge device 2 and said receiving device 3.

In addition, for confidentiality reasons, the number of the bridge device 2 is made invisible to the receiving user 3.

When a call is active, the bridge device 2 is busy by displaying an icon associated with the assuming device 2.

When the receiving user accepts the incoming call, call minutes counting starts, used by the unit control logic 4 and, locally, on said bridge device 2, by means of said PST software module.

The assuming user can stop the phone call at any time by the PST software module, but the assuming user does not receive any remuneration for the minutes already consumed by said phone call.

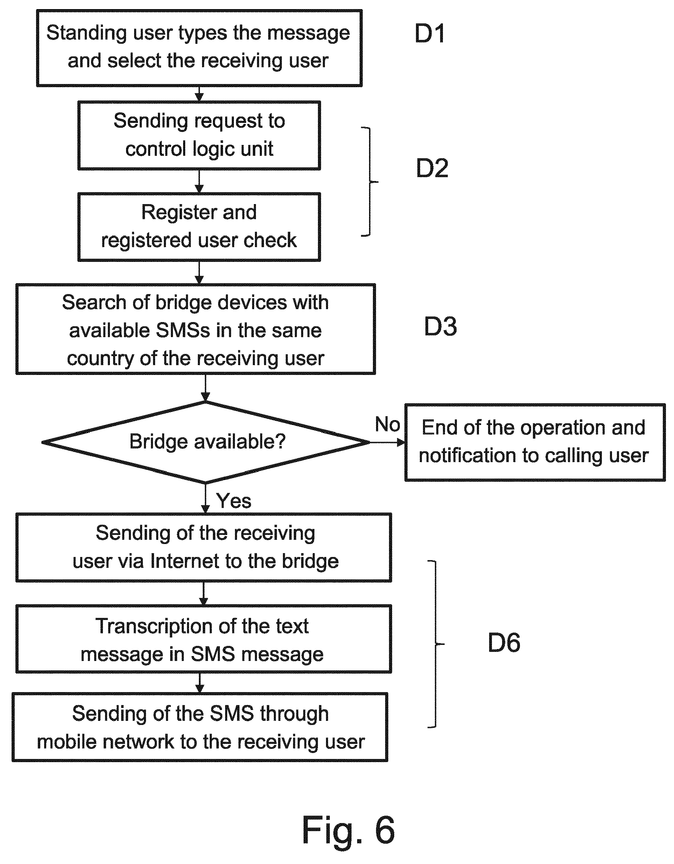

The operation of the system described above for sending messages is substantially similar to that for making a phone call, and it takes place in the following way, with reference to figures 6 and 7.

When a sending user intends to use the sender device 1 to send a free message, i.e. by taking advantage of available telephone traffic of said assuming user, the dials the phone number receiving user from the address book contained in the GUI interface.

Said receiving user can also reside in a country other than the sending user and may also be provided with a phone only with GSM/GPRS (2G) connection or with a landline number.

The data traffic is transmitted, also in this case, via Internet network, until it reaches a bridge device 2 provided to offer messages and that actually carries out the sending of the message to the receiving device 3, acting as a bridge between the Internet network and the typical GSM or PSTN (Public Switched Telephony network) network.

In particular, said SST software module allows to send a free message in the following stages.

The sending user types the message and select the number of the receiving user, sending the request to the control logic unit 4.

Said control logic unit 4 selects from the available assuming user's registry an assuming user that resides in the destination geographical area of the message and forwards it to said bridge device 2, via Internet network, the text of the message along with the number of the receiving device 3.

Said SST software module allows to display the prepared message on said bridge device 2.

Said message is then sent from said bridge device 2 to said receiving device 3, using the common GSM network, without displaying the number of the bridge device 2.

The number of the sending device 1 is inserted at the beginning of the message, using a numeric code, depending on the service provider of the bridge device 2.

The sending user is notified when the message is received by the receiving user, by means of a further message sent by the bridge device 2, which, by means of a suitable signal, notifies it to the control logic unit 4 and in its turn to the calling/sending device 1.

As it is evident from the description, an advantage of this system is to make free phone calls to any destination user, even if resident abroad or provided with devices without Internet connection, thus lowering costs.

A further advantage of the system object of the invention is to allow sending free messages to any recipient, even if residing abroad or provided with devices without Internet connection.

A further advantage is the possibility of creating a channel where the total cost of data transmission is almost zero and of reaching fixed numbers and devices without Internet connection.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. System (S) for making phone calls and sending text messages (SMS) comprising
at least one calling/sending device (1) for transmitting and receiving a signal, as digital telephone signals and/or text messages;
one or more bridge device (2), each one for receiving and transmitting said digital signal from said calling/sending device (1)through a digital channel, as the Internet network and the like, for a predefinable quantity of time and a predefinable quantity of data,
at least one receiving device (3) connectable for receiving and transmitting to said calling/sending device (1),
in which said one or more bridge devices (2) are each equipped with a software program capable of receiving from said calling/sending device (1) and of transmitting to said calling/sending (1) said digital signal, converting said digital signal into an analog signal suitable for being transmitted through the conventional telephone network (PSTN), and capable to transmit to said receiving device (3) and to receive from said receiving device (3), said analog signal through said conventional telephone network (PSTN).

2. System (S) according to the preceding claim, **characterized in that** said software program simulates the connection of said bridge device (2) with an interface Bluetooth transceiver, such as a headset and a microphone, in order to convert the digital signal received from said calling/sending device (1), into an analog signal, and the analog signal, received by said receiving device (3), into a digital signal, such as that the one to be transduced by said Bluetooth transceiver interface, so that said analog signal is transmitted through said conventional telephone network (PSTN) to said receiving device (3), and said digital signal is transmitted to said calling/sending device (1), through said digital channel.

3. System (S) according to the anyone of the preceding claim, **characterized in that** a remote control logic unit (4) capable to connect to said calling/sending device (1) and receive said signal, comprising storage means for storing a plurality of information associated with said at least one calling/sending device (1) and said one or more bridge devices (2), so as to select from said storage means one of said bridge devices (2) according to the availability of said predefinable quantity of time and quantity of data, and sending said signal to said selected bridge device (2), so that the transmission of said signal occurs between said at least one calling/sending device (1) and said bridge device (2), and *viceversa,* by said digital channel, such as Internet network and the like, while the transmission of said signal between said bridge device (2) and said receiving device (3), and *viceversa,* occurs by a conventional telephonic connection.

4. System (S) according to the preceding claim, **characterized in that** said at least one calling/sending device (1) and one or more bridge devices (2) comprise computation means configured to run a further program, comprising a first operating module (Phone Service Transfer - PST) for the transmission of said telephonic signal, and a second operating module (Service Transfer Application - SST) for the transmission of said signal, such as a text message, by which said at least one calling/sending device (1) and one or more bridge devices (2) can interact with said remote control logic unit (4).

5. System (S) according to the preceding claim, **characterized in that** said first operating module (PST) simulates, on said one or more bridge devices (2), a device capable to take said signal received by said one or more bridge devices (2) from said calling/sending device (1) by Internet and to reproduce it on said conventional telephonic connection activated between said one or more bridge devices (2) and said at least one receiving device (3), in order to transmit said signal coming from said at least one calling device (1) to said at least one receiving device (3).

6. System (S) according to anyone of the preceding claims 4 or 5, **characterized in that** said program is provided with a graphic interface (Graphic User Interface - GUI), which:
- implements a numeric keypad and/or allows the interaction with the physical keypad provided on said at least one calling/sending device (1) or one or more bridge devices (2);
- comprises a list of telephonic numbers, corresponding to said at least one receiving device (3); and
- comprises a key to enter in said list of numbers, selecting a number and sending said signal to said at least one receiving device (3) by said remote control logic unit (4).

7. System (S) according to the preceding claim, **characterized**
**in that** said interface (GUI) of said one or more bridge devices (2) allows to predefine said quantity of time, said quantity of available data and the slot of time, in terms of hours and days in a week, when making available said quantity of time and quantity of data; and
**in that** said interface (GUI) comprises storage means capable to periodically store said quantity of time and quantity of data, which both said bridge device (2) and said calling/sending device (1) have made use of, to send/receive said signal.

8. System (S) according to anyone of the claims 3-7, **characterized**
**in that** said control logic unit (4) associates the transmission of said signal from said at least one calling/sending device (1), to the availability, in terms of said quantity of time and quantity of predefined data, of said one or more bridge device (2); and
**in that** said plurality of information stored in said storage means comprised in said control logic unit (4) are phone numbers related to said one or more bridge devices (2) and said plurality of information are said quantity of predefined time and quantity of predefined data updated.

9. System (S) according to anyone of the preceding claims, **characterized**
**in that** said at least one calling/sending device (1) is chosen among one of the following electronic devices such as a 3G cellular phone and/or a 4G cellular phone, and/or a smartphone and/or a tablet, provided with an Internet connection;
**in that** said one or more bridge devices (2) are chosen among one of the following electronic devices such as a 3G cellular phone and/or a 4G cellular phone, and/or a smartphone and/or a tablet, provided with an Internet connection;
**in that** said at least one receiving device (3) is chosen amongst one of the following electronic devices such as 2G cellular phone, and/or a 3G cellular phone, and/or a 4G cellular phone, and/or a fixed telephone; and
**in that** said at least one calling/sending device (1) and at least one receiving device (3) are placed in different geographical places during said transmission/reception of said signal.

10. System (S) according to anyone of the preceding claims, **characterized in that** said at least one calling/sending device (1) can operate also as a bridge device (2) and *viceversa.*

11. Method for making phone calls and sending messages comprising the following steps:
(A) providing at least one calling/sending device (1) for transmitting and receiving a signal, such as digital telephone signals and/or text messages;
(B) providing at least one receiving device (3) for receiving and transmitting a signal, such as telephone signals and/or text messages;
(C) providing at least one bridge device (2), for the reception and the transmission of said digital signal from said calling/sending device (1) through a digital channel, such as the Internet network and the like, for a predefinable amount of time and a predefinable amount of data;
(D) receiving device by said calling/sending device (1) and transmitting to said calling/sending device (1) said digital signal;
(E) converting said digital signal into an analog signal suitable for the transmission through the conventional telephone network (PSTN);
(F) transmitting to said receiving device (3) and receive from said receiving device (3), by means of said bridge device (2), said analog signal through said conventional telephone network (PSTN).

12. Method according to the preceding claim, **characterized in that** it comprises the steps of simulating the connection of said bridge device (2) with an Bluetooth transceiver interface, such as a headset and a microphone, in order to convert said digital signal, received from said calling/sending device (1), into an analog signal, and the analog signal, received by said receiving device (3), into a digital signal, such as that to be transduced by means of said Bluetooth transceiver interface, so that:
- said analog signal is transmitted to the digital interface of said bridge device (2) and then forwarded through said conventional telephone network (PSTN) to said receiver (3); and
- said digital signal is transmitted to said calling/sending device (1), through said digital channel.

13. Method according to anyone of claims 11 or 12, **characterized in that** it comprises the following steps:
- providing said calling/sending device (1) a first operative module (PST) for the transmission/reception of a telephonic signal, and a second operative module (SST) for the transmission/ reception of a text message, and a graphic interface (GUI) comprising storage means to store a phonebook, where there are phone numbers related to said at least one receiving device (3);
- at least one bridge device (2) of said first operative module (PST) and second operative module (SST);
- providing a control logic unit (4), provided with storage means to store a list, said list comprising data related to one or more bridge devices (2) available in terms of a predefinable quantity of time to make calls and a predefinable quantity of data for sending text messages, said control logic unit (4) being able to connect with said calling/sending device (1) and to receive and send said signal, and select from said list one of said bridge device (2), to send said signal to said bridge device (2) selected according to the following sub-steps:
- selecting, by said at least one calling/sending device (1), a telephone number related to said at least one receiving device (3) from said phonebook comprised in said graphic interface (GUI) and sending said signal from said at least one calling/sending device (1) to said at least one selected receiving device (3);
- receiving said signal sent from said control logic unit (4), which identifies the geographical destination place of said signal according to the code contained in said telephone number, related to at least one selected receiving device (3), received from said calling/sending device (1);
- selecting, by said control logic unit (4), from said list of available bridge devices (2), at least one available bridge device (2), said at least one bridge device (2) being dwelled in the destination geographical place of said signal and forwarding to said bridge device (2), by Internet, the request of sending said signal with the number of said receiving device (3);
- together with said selection of said phase (D3), activating, by said control logic unit (4), a full duplex communication channel by Internet between said calling/sending device (1) and said bridge device (2); and activating, by said first operative module (PST), installed on said bridge device (2), the transmission of said signal from said bridge device (2) to said receiving device (3), by a telephony connection; and
- transmitting said signal from said receiving device (3) to said bridge device (2) by said conventional telephonic connection and from said bridge device (2) to said calling/sending device (1), by Internet.
